# EUROPÄISCHE PATENTSCHRIFT

(11) **EP 1 348 976 B1**
(45) Veröffentlichungstag und Bekanntmachung des Hinweises auf die Patenterteilung: **03.05.2006**
(21) Anmeldenummer: 02360074.5
(22) Anmeldetag: 28.02.2002
(51) Int. Cl.: G01S 3/16, H04Q 7/38

(54) **Verfahren und Vorrichtungen zum Bestimmen der Funkempfangsrichtung in einem Mobilkommunikationsnetz**
Method and device for determining the bearing of an incoming radio signal in a mobile communications network
Procédé et dispositif de détermination de l'angle de provenance d'un signal radio dans un système de communication mobile

(43) Veröffentlichungstag der Anmeldung: 01.10.2003
(73) Patentinhaber: ALCATEL, 75008 Paris (FR)
(72) Erfinder: Schreiner, Matthias, 71272 Malmsheim (DE); Tangemann, Michael, Dr., 71229 Leonberg (DE)
(74) Vertreter: Schultenkämper, Johannes

(56) Entgegenhaltungen:
- EP-A- 1 094 335
- WO-A-99/33302

## Beschreibung

Die Erfindung betrifft ein Verfahren zum Bestimmen der Funkempfangsrichtung in Abwärtsrichtung an einem Funkfeststationsstandort in einem Mobilkommunikationsnetz gemäß dem Oberbegriff des Anspruchs 1. Außerdem betrifft die Erfindung ein Mobilkommunikationsnetz mit Vorrichtungen, insbesondere mit einem Rechner, einer Funkfeststation und einem Mobilkommunikationsendgerät, zur Durchführung des Verfahrens entsprechend den Oberbegriffen der nebengeordneten Ansprüche.

In Mobilkommunikationsnetzen, insbesondere in zellularen Mobilkommunikationsnetzen, wie beispielsweise dem GSM (Global System for Mobile Communications) oder dem UMTS (Universal Mobile Telecommunications System), ist es wichtig den momentanen Aufenthaltsort der Mobilfunkteilnehmer zu kennen. Von einem zunehmenden Interesse sind die sogenannten "location based services", das heißt Mobilfunkdienste, die abhängig sind vom momentanen Aufenthaltsort der Mobilfunkteilnehmer. Um diese und ähnliche Dienste durchführen zu können ist es notwendig nicht nur die Funkzelle oder den Funkfeldbereich zu kennen, in dem sich der Funkteilnehmer aufhält, sondern eine genauere Positionsbestimmung bis hin zu wenigen Metern durchzuführen. Verschiedene Verfahren dazu sind bereits bekannt. So etwa ist das sogenannte Triangulations-Verfahren bekannt, bei dem die Abstände des Mobilkommunikationsendgerätes zu benachbarten Funkfeststationen mittels Messung von Funksignallaufzeiten ermittelt werden, wobei an Hand der Kreuzungspunkte von entsprechenden Entfernungsradien der momentane Aufenthaltsort bestimmt wird. Dazu muss aber sowohl der Kontakt zu mindestens zwei entfernten Funkfeststationen bestehen. Außerdem müssen die Funksender der Funkfeststationen aufeinander synchronisiert sein oder es müssen zumindest die Zeitdifferenzen zwischen den Sendesignalen, insbesondere zwischen den Symbolen, bekannt sein.

Es ist auch bekannt, zunächst die Funkempfangsrichtung mittels der Auswertung von den an Gruppenantennen, sogenannten "smart antennas", vorhandenen Funksignalanteilen zu bestimmen. Dann wird zusätzlich dazu auch die Entfernung zur Funkfeststation (durch Messung der Signallaufzeit) ermittelt, sodass schließlich der Aufenthaltsort genauer bestimmt werden kann. Jedoch sind die bekannten Verfahren mit einem nicht unerheblichen Rechenaufwand verbunden und erfordern bestimmte Voraussetzung, wie etwa den Kontakt zu mehreren Funkfeststationen oder das Vorhandensein von Gruppenantennen.

In der europäischen Patentveröffentlichung EP-A-1094335 wird ein Verfahren zum Bestimmen der Funkempfangsrichtung in Aufwärtsrichtung an einem Funkfeststationsstandort in einem Mobilkommunikationsnetz beschrieben.

In der PCT-Anmeldung WO 99/33302 wird ein Mobilkommunikationsendgerät beschrieben, von dem die Empfangspegel der Funksignale gemessen werden.

Aufgabe der Erfindung ist es ein Verfahren zur Bestimmung der Funkempfangsrichtung vorzustellen, das möglichst einfach realisiert werden kann und dennoch genaue Angaben über die tatsächliche Funkempfangsrichtung liefert. Ebenfalls sollen entsprechende Vorrichtungen dafür vorgestellt werden.

Gelöst wird die Aufgabe durch ein Verfahren mit den Merkmalen nach Anspruch 1.

Demnach wird vorgeschlagen, dass von dem jeweiligen Mobilkommunikationsendgerät zumindest die Empfangspegel der Funksignale gemessen werden, die von einer ersten und von einer zweiten des Sendeantennen abgestrahlt werden. Dabei wird aus den beiden gemessenen Empfangspegeln ein Verhältniswert gebildet. Dieser ist weitgehend unabhängig ist von den herrschenden Funkausbreitungsbedingungen, insbesondere von den Pfadverlusten auf den Funkstrecken. Mittels dieses Verhältniswertes wird dann eine Schätzung von Azimutwinkeln für die zu bestimmende Funkempfangsrichtung durchgeführt.

Gleichfalls wird ein zur Durchführung des Verfahrens geeignetes Mobilkommunikationsnetz vorgeschlagen, das einen Rechner enthält, der mit dem Funkfeststationsstandort verbunden ist und der aus den beiden gemessenen Empfangspegeln den Verhältniswert bildet und damit wiederum die Azimutwinkel schätzt.

Die Erfindung lässt sich also an jedem einzelnen Funkfeststationsstandort bereits vollständig durchführen. Es ist kein Kontakt zu mehreren Funkfeststationen notwendig. Außerdem werden Messwerte verwertet, nämlich die Empfangspegel der Funksignale, die in vielen Fallen schon für andere Zwecke, wie beispielsweise für Handover-Messungen ermittelt werden müssen und somit bereits im Mobilkommunikationsnetz vorliegen. Diese Messwerte werden z.B. im Rahmen eines sogenannten Measurement-Reports von den Mobilkommunikationsendgeräten zu dem Funkfeststandort übertragen. Durch das erfindungsgemäße Berechnen eines Verhältniswertes wird erreicht, dass die die Empfangspegelwerte beeinträchtigenden Größen eliminiert werden, insbesondere die für die Funkausbreitungsbedingungen charakteristischen Größen, wie etwa Funkfelddampfung oder Pfadverlust. Diese Größen sind stark abhängig von der gegebenen Situation, wie etwa Sichtfunkverbindung, Funkabschattung, Fading, Reflexionen oder Waveguide-Effekte. Die Erfindung geht von der Erkenntnis aus, dass beide miteinander ins Verhältnis gesetzte Empfangspegel gleichermaßen beeinträchtigt werden, sofern sich die beiden Sendeantennen am selben Ort, vorzugsweise am selben Antennenmast, montiert sind. In diesem Fall wird durch die Bildung des Verhältniswertes (Quotientenbildung) ein Relativwert gewonnen, der weitestgehend unabhängig ist von den Funkausbreitungsbedingungen und der somit eine verlässliche Schätzung der Azimutwinkel und Bestimmung der Funkempfangsrichtung ermöglicht. Zudem ist die Quotientenbildung einfach und schnell auszuführen. Insgesamt wird also ein sehr einfach zu realisierendes aber doch sehr zuverlässiges Verfahren vorgeschlagen.

Besonders vorteilhafte Ausgestaltungen der Erfindung ergeben sich aus den Unteransprüchen:

Demnach ist es von besonderem Vorteil, wenn die Azimutwinkel dadurch geschätzt werden, dass der gebildete Verhältniswert mit vorgegebenen Referenzwerten verglichen wird, die für verschiedene Azimutswinkel den zu erwartenden Verhältniswert angeben. Die Referenzwerte sind Sendeleistungswerte, die in Hauptstrahlrichtung dem EIRP-Wert (EIRP: effective isotopic radiated power - effektive isotopische Strahlungsleistung) entsprechen und die in den anderen Richtungen den aufgrund des Antennendiagramms gedämpften Sendeleistungswerten entsprechen. Auch die Referenzwerte werden, die also die winkelabhängige Verteilung der Strahlungsleistung an den Sendeantennen angeben, werden ebenfalls ins Verhältnis zueinander gesetzt und werden vorzugsweise in Nachschlagtabellen abgelegt. Somit ist es möglich, ein schnelles und effektives look-up-table-Verfahren durchzuführen, das den Rechenaufwand noch weiter reduziert. Durch den Vergleich von Verhältniswerten auf der Empfangsseite (Messwerte) mit Verhältniswerten auf der Sendeseite (Referenzwerte) ist es möglich, dass die Azimutwinkel ohne Kenntnis der Funkfelddämpfung geschätzt werden können.

Auch ist es von besonderem Vorteil, wenn die Sendeantennen Sektorantennen oder Gruppenantennen sind und wenn die Funkversorgungsbereiche Funksektoren sind, welche jeweils von einer der Sektorantennen beziehungsweise Gruppenantennen versorgt werden. In diesem Zusammenhang ist es sehr vorteilhaft , wenn die beiden Sendeantennen, von deren Funksignalen die Empfangspegel gemessen werden, zwei zueinander benachbarte Funkversorgungsbereiche versorgen, und wenn das Mobilkommunikationsendgerät sich zumindest in einem dieser beiden Funkversorgungsbereiche aufhält. Dadurch werden die am stärksten vorherrschenden Empfangspegel miteinander ins Verhältnis gesetzt, was die Zuverlässigkeit der Berechnungsmethode weiterhin verbessert.

Unabhängig davon oder auch im Zusammenhang damit ergibt sich ein weiterer besonderer Vorteil, wenn von dem Mobilkommunikationsendgerät auch diejenigen Empfangspegel der Funksignale gemessen werden, die von den übrigen Sendeantennen abgestrahlt werden, wobei aus jeweils zwei gemessenen Empfangspegeln ein Verhältniswert gebildet wird. Dann wird mittels dieser weiteren Verhältniswerten die Schätzung von weiteren Azimutwinkeln durchgeführt und schließlich mittels aller geschätzten Azimutwinkeln wird die Funkempfangsrichtung genauer bestimmt. Es wird also ein iteratives Verfahren vorgeschlagen, bei dem paarweise die Empfangspegel ins Verhältnis zu einander gesetzt werden, wobei die vielen sich ergebenden Verhältniswerte eine noch genauere Schätzung der Azimutwinkel und damit auch eine noch zuverlässigere Bestimmung der Funkempfangsrichtung ermöglichen.

Es ist außerdem von besonderem Vorteil, wenn eine der Sendeantennen eine Rundstrahlantenne ist, von der der gesamte Bereich des Funkfeststationsstandortes versorgt wird, und wenn die anderen Sendeantennen Sektor- oder Gruppenantennen sind, von denen sektorförmige Funkversorgungsbereiche versorgt werden. Dabei werden von dem Mobilkommunikationsendgerät die Empfangspegel gemessen, die sowohl von Funksignalen der Rundstrahlantennen als auch von Funksignalen der Sektor- beziehungsweise Gruppenantenne herstammen. In diesem Fall kann also auch eine Bestimmung der Funkempfangsrichtung erfolgen innerhalb des jeweiligen Funkversorgungsbereichs, von dem das Mobilkommunikationsendgerät direkt versorgt wird, wobei zum einen auf den Empfangspegel bezüglich der Rundstrahlantenne (z.B. Empfangspegel auf dem Rundspruchsignalisierungskanal) und zum anderen auf den Empfangspegel des Versorgungsbereiches (z.B. Empfangspegel auf dem Nachrichtenkanal innerhalb des Sektors) zurückgegriffen wird.

Die Erfindung selbst sowie die sich daraus ergebenden Vorteile werden nun an Hand eines Ausführungsbeispieles beschrieben, wobei auf die folgenden Figuren bezug genommen wird:
- Figur 1a,: die den Aufbau eines erfindungsgemäßen Mobilkommunikationsnetzes zeigt;
- Figur 1b,: die die Struktur eines Funkfeststationsstandortes zeigt;
- Figur 2a und 2b,: die den Sendeleistungspegelverlauf (Antennendiagramme oder Funktionen) der Funkversorgungsbereiche am Funkfeststationsstandort zeigen;
- Figur 3,: die das Ablaufdiagramm eines erfindungsgemäßen Verfahrens zeigt;
- Figur 4a und 4b,: die die zu erwartenden Verhältniswerte für verschiedene Azimutwinkel zeigen;
- Figur 5,: die die Verteilung mehrerer Azimutwinkel und die daraus resultierende Funkempfangsrichtung zeigt; und
- Figur 6,: die ein Prinzip zur genauen Positionsbestimmung einem zellularen Funknetz unter Zuhilfenahme des erfindungsgemäßen Verfahrens verdeutlicht.

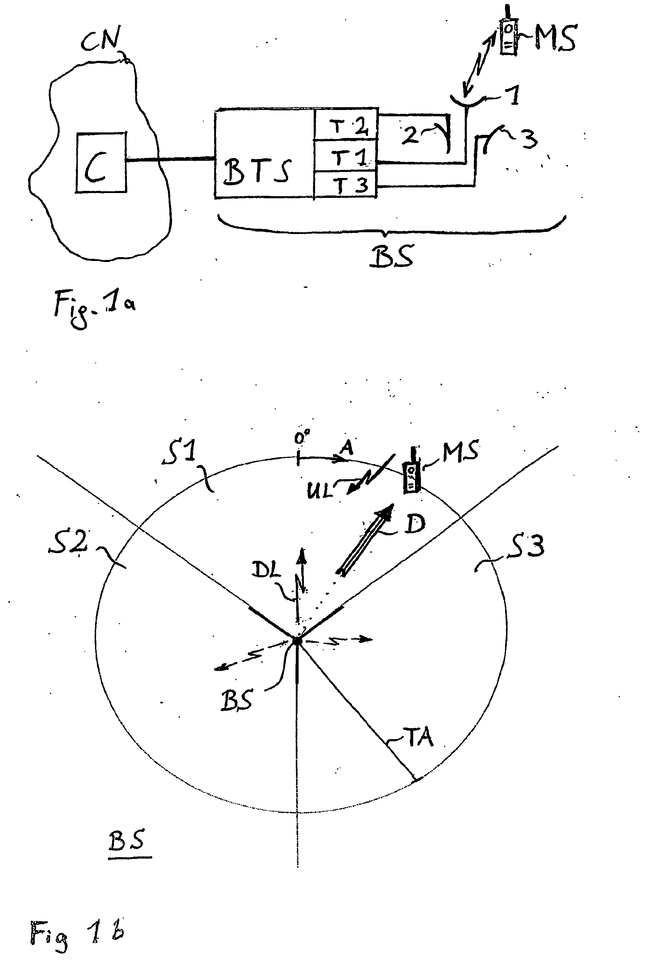

Die Figur 1a zeigt den schematischen Aufbau eines erfindungsgemäßen Mobilkommunikationsnetzes mit mindestens einem Funkfeststationsstandort BS, der an das Kernnetzwerk CN des Mobilkommunikationsnetzes angeschlossen ist. An dem Funkfeststationsstandort BS befindet sich eine Funkfeststation BTS mit drei Funksendern T1, T2 und T3, die verschiedene Funkversorgungsbereiche (siehe S1 bis S3 in der Fig. 1b) des Funkfeststationsstandortes BS versorgen. Die Funksender müssen sich nicht in einer einzigen Funkfeststation befinden, sondern können auch jeweils in einer anderen Funkfeststation integriert sein. Dies kann etwa dann der Fall sein, wenn verschiedene Funkübertragungsverfahren in den Funkversorgungsbereichen zum Einsatz kommen.

Jeder der Funksender T1, T2 oder T3 sendet über eine Sendeantenne, die hier eine Sektorantenne 1, 2 bzw. 3 ist, in seinem Funkversorgungsbereich Funksignale an Mobilkommunikationsendgeräte, von denen beispielhaft eines MS in der Fig. 1a eingezeichnet ist. Es ist für die Rechengenauigkeit des Verfahrens aber vorteilhaft, wenn die Sendeantennen 1, 2 und 3 möglichst an demselben Ort, z.B. auf einem Antennenmast, montiert sind. Das hier dargestellte Mobilkommunikationsendgerät MS befindet sich in direkter Funkverbindung mit dem Sender T1 der Funkfeststation BTS. Die Funkfeststation ist unter anderem mit einem Rechner C, der sich im Kernnetzwerk CN befindet, verbunden. In diesem Beispiel ist der Rechner C in der in der Funkvermittlungsstelle (Mobile Switching Center) integriert und ermittelt nun nach dem noch später genau beschriebenen Verfahren die Funkempfangsrichtung, mittels der z.B. die genaue Position des Mobilkommunikationsendgerätes MS schließlich bestimmt werden kann. Der Rechner kann auch an anderen Stellen installiert werden, so etwa im Funkzugangsnetzwerk, insbesondere in der Funkfeststationssteuerung (base station controller) oder in der Funknetzsteuerung (Radio Network Controller), ebenfalls auch in Datenknotenpunkten, wie etwa dem sogenannten Gateway GPRS Support Node (GPRS: General Packet Radio Service) oder dem Serving GPRS Support Node für das UMTS.

Die Figur 1b zeigt schematischen in der Draufsicht den strukturellen Aufbau des Funkfeststationsstandortes BS, der drei Funkversorgungsbereiche in Form von drei aneinander grenzenden Sektoren S1, S2 und S3, umfasst. Jeder der Sektoren S1, S2 oder S3 wird von einer Sendeantenne versorgt, die als Sektorantenne 1, 2 bzw. 3 mit einem Öffnungswinkel von 120° ausgebildet ist. Das Mobilkommunikationsendgerät MS befindet sich direkt im Funkversorgungsbereich S1 und steht in Funkverbindung mit der Funkfeststation (hier nicht dargestellt; siehe BTS in der Fig. 1 a) über die entsprechende Sektorantenne. Das bedeutet, dass dieser Sektor S1 der sogenannten "serving cell" oder auch "active set" entspricht. Die Funksignale werden von der entsprechenden Sendeantenne (siehe 1 in Fig. 1a) in Abwärtsrichtung DL zu dem Mobilkommunikationsendgerät MS übertragen. In umgekehrter Richtung, d.h. in Aufwärtsrichtung UL, sendet das Mobilkommunikationsendgerät MS seine Funksignale zurück an die Antenne.

Es soll nun die Funkempfangsrichtung D in Abwärtsrichtung bestimmt werden, um danach z.B. eine Positionsbestimmung des Mobilkommunikationsendgerätes MS zu ermöglichen. Dies kann beispielsweise dadurch erfolgen, dass zum einen die Funkempfangsrichtung D ermittelt wird und zum anderen der Abstand zwischen Sendeantenne und Mobilkommunikationsendgerät MS ermittelt wird, der sich aus der Funksignallaufzeit TA ableiten lässt, die wiederum in Form eines sogenannten "timimg advance" oder auch "round trip time" angegeben ist. Der Abstand entspricht einem Radius um den Mittelpunkt des Funkfeststationsstandortes BS. Die Funkempfangsrichtung D wiederum wird durch einen Azimutwinkel A angegeben. An Hand von dem Radius und dem Winkel lässt sich dann die Position des Mobilkommunikationsendgerätes MS genau bestimmen. Die hier vorgeschlagene Erfindung ist jedoch besonders auf die Bestimmung der Funkempfangsrichtung gerichtet.

Wie an Hand der Figur 1b dargestellt sind die sektorförmigen Funkversorgungsbereiche S1 bis S3 derart ausgerichtet, dass der Funkversorgungsbereich S1 mit seiner Hauptabstrahlrichtung in Richtung Norden zeigt, das heißt dahin zeigt, wo der Azimutwinkel A gleich 0 Grad beträgt. Die anderen um jeweils 120 Grad versetzten Sektoren S2 und S3 zeigen demnach in ihre Hauptrichtungen 120 Grad beziehungsweise 240 Grad. Das Mobilkommunikationsendgerät MS befindet sich nun innerhalb des Funkfeldversorgungsbereichs (Funksektors) S1. Man könnte nun die Funkempfangsrichtung D dadurch bestimmen, dass der von dem Funkkommunikationsendgerät MS gemessene Empfangspegel verglichen wird mit dem Antennendiagramm der für den Sektor S1 verwendeten Sektorantenne. Dadurch würden aber zunächst zwei symmetrisch zur Nordrichtung gleichermaßen weit geöffnete Azimutwinkel ermittelt, so dass keine eindeutige Bestimmung der Funkempfangsrichtung D erzielt werden könnte. Außerdem müsste die Funkfelddämpfung bekannt sein, um den gemessenen Empfangspegel mit den Referenzwerten des Antennendiagramms, vergleichen zu können. Zudem sind die Funkausbreitungsbedingungen, insbesondere die Funkfelddämpfung, nicht stabil, sondern abhängig von auftretenden Effekten, wie etwa Funkabschattung, Reflexionen oder Fading und Wetteränderungen mit schwankender Luftfeuchtigkeit und Temperatur. Schon allein die Probleme mit Funkabschattung und Relexionen, wie sie besonders häufig in dichtbesiedelten und städtischen Gebieten auftreten, erschweren eine zuverlässige Bestimmung der Funkempfangsrichtung nach den herkömmlichen Methoden oder machen sie gar unmöglich.

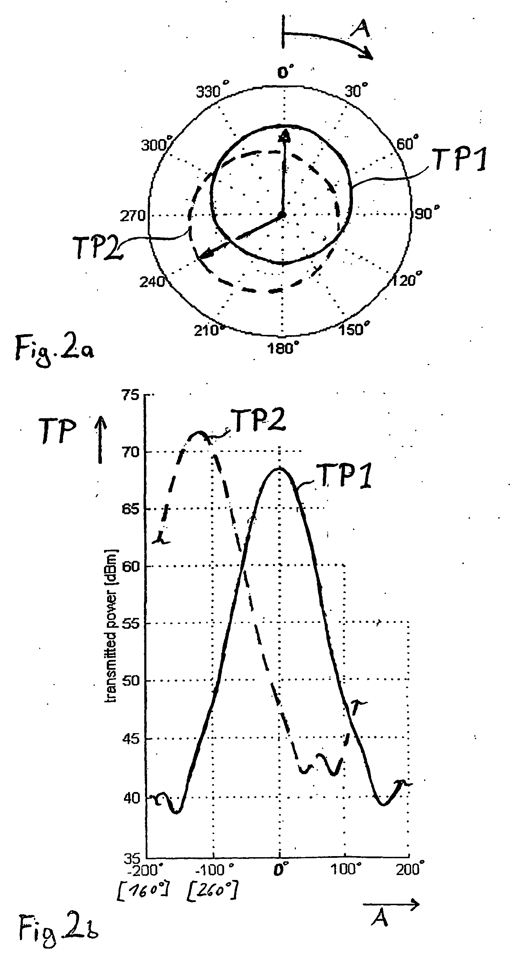

Deshalb wird hier ein neues Verfahren vorgeschlagen, dass unter anderem auch an Hand der Figur 2 im weiteren näher beschrieben wird:

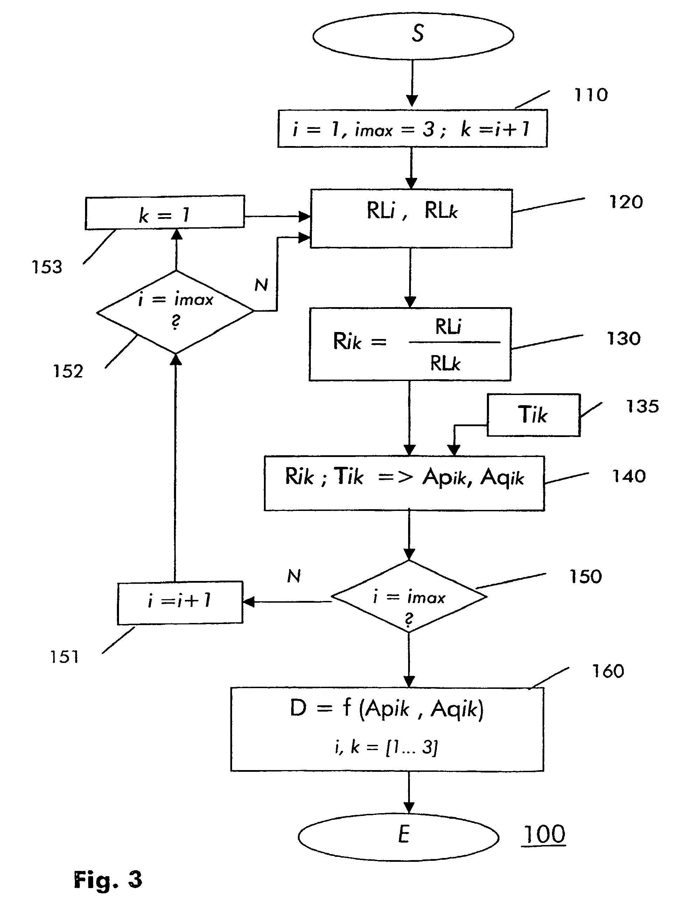

Die Figur 3 zeigt das Ablaufdiagramm für ein erfindungsgemäßes Verfahren 100 mit den Schritten 110 bis 160, das hier als iteratives Verfahren ausgebildet ist. Nach dem Start S des Verfahrens werden in einem ersten Schritt 110 folgende Iterations-Parameter gesetzt:

Ein erster Index i, der auch Schleifenzähler ist, wird auf seinen Anfangswert gleich 1 gesetzt. Ein Maximalwert imax, der der Anzahl der Funkfeldbereiche (Sektoren) entspricht, wird zu 3 gesetzt. Und ein zweiter Index k wird zu i+ 1 gesetzt.

In dem nachfolgenden Schritt 120 werden zunächst die Empfangspegel in den verschiedenen Funkfeldbereichen gemessen. Dabei wird ein erster Empfangspegel RLi und ein zweiter RLk ermittelt. Für den ersten Durchlauf bedeutet dies, dass der Empfangswert RL1 für den ersten Sektor und der Empfangswert RL2 für den zweiten Sektor (siehe S1 und S2 in der Figur 1 b) gemessen werden.

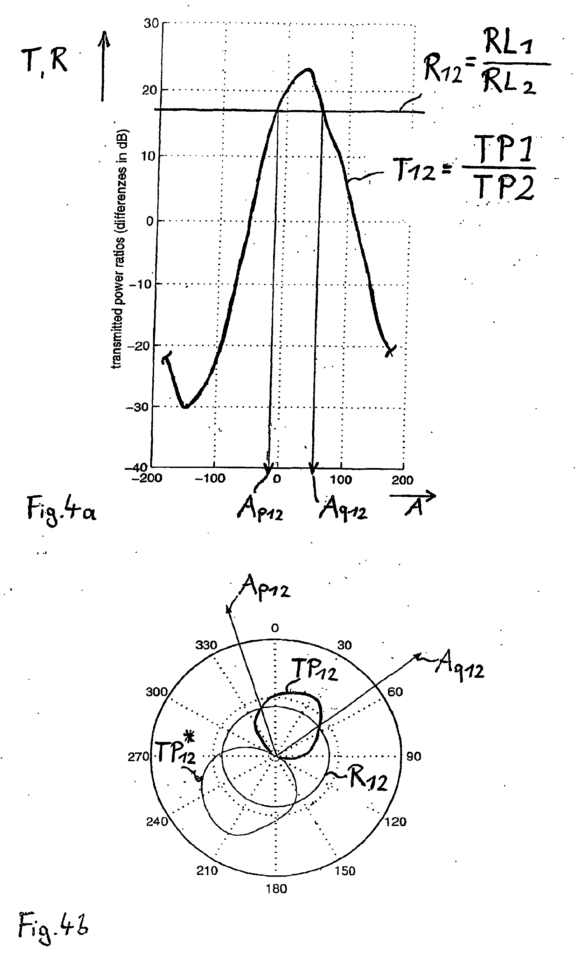

Dann werden in einem nächsten Schritt 130 diese gemessenen Empfangspegel zueinander in das Verhältnis gesetzt, so dass sich ein Verhältniswert Rik bildet. In diesem Fall bedeutet dies, dass der Verhältniswert R12 aus dem Verhältnis von RL1 zu RL2 gebildet wird. Dieser berechnete Verhältniswert R12 wird später zur Bestimmung der Azimutwinkel herangezogen. In einem Zwischenschritt 135 werden Referenzwerte Tik aus einer Nachschlagetabelle (look-up-table) abgerufen. Diese Referenzwerte geben die Charakteristik der in der Figur 4a dargestellten Referenzkurve wieder. In diesem ersten Fall handelt es sich also um die Referenzwerte T12, die einer Kurve entsprechen, die dem Verhältnis des Sendeleistungspegel TP1 zu dem Sendeleistungspegel TP2 entspricht. Es werden also die sendeseitigen Leistungspegelfunktionen TP1 und TP2 für die Sektoren S1 und S2 (siehe Fig. 1b sowie 2b und 2b) zueinander ins Verhältnis gesetzt und als Referenzwerte T12 herangezogen.

In einem nun folgenden Schritt 140 werden sowohl die Referenzwerte Tik=T₁₂ als auch die ermittelten Verhältniswerte Rik=R₁₂ miteinander verglichen, um daraus die gesuchten Azimutwinkel Apik=Ap₁₂ und Aqik=Aq₁₂ zu ermitteln (siehe dazu auch Figur 4a). Für diesen Fall bedeutet es, dass der Verhältniswert R12 mit dem Referenzwert T12 verglichen wird und dass dort wo Gleichheit herrscht, ein entsprechender Azimutwinkel festgestellt wird. In diesem Fall werden also ein Azimutwinkel Ap12, der etwa -20° und ein Azimutwinkel Aq12, der etwa 57° entspricht ermittelt (siehe auch Figuren 4a und 4b). Nur einer dieser beiden Azimutwinkel zeigt tatsächlich in die gesuchte Funkempfangsrichtung. Der andere ist nicht relevant und ergibt sich aufgrund der zweideutigen Auswertungsverfahrens.

Um nun herauszufinden, welcher Azimutwert der richtige ist, wird eine Schleife mit den Teilschritten 120 bis 140 zumindest noch einmal durchlaufen.

Dazu wird zunächst festgestellt ob der Zähler i bereits den Maximalwert imax erreicht hat (Schritt 150). In diesem Beispiel also wird geprüft, ob i = iₘₐₓ = 3 ist. der Ist dies nicht der Fall so wird in einem Schritt 151 der Zähler i um 1 erhöht und anschließend in einem Schritt 152 geprüft, ob jetzt der Zähler seinen Maximalwert imax erreicht hat. Ist dies nicht der Fall so folgt direkt der Schritt 120 und nachfolgende Schritte 130, 135, 140 usw.. Das bedeutet, dass im zweiten Durchlauf (i=2) die Empfangswerte RL2 und RL3 für die entsprechenden Sektoren S2 und S3 gemessen werden (Schritt 120), dass dann daraus der Verhältniswert R23 gebildet wird (Schritt 130), und dass schließlich daraus weitere Azimutwinkel Ap23 und Aq23 geschätzt werden (Schritt 140).

Wird jedoch im Schritt 152 festgestellt, dass der Zähler bereits seinen Maximalwert erreicht hat (i = 3), d.h. hier dass die Schleife bereits zweimal durchlaufen wurde, so wird in einem Schritt 153 der zweite Index zu k=1 gesetzt. Das bedeutet in diesem Fall, dass nun im Schritt 120 die Empfangspegelwerte RL3 und RL1 gemessen werden. Damit wird also auch das letztmögliche Pärchen bezüglich der Sektoren S3 und S1 gebildet und der entsprechende Verhältniswert R31 bestimmt. Schließlich folgt auch hierzu die Schätzung der Azimutwinkel Ap31 und Aq31. Nach dem dritten Durchlauf der Schleife wird dann an Hand der Entscheidungsstufe 150 festgestellt, dass der Zähler seinen Maximalwert erreicht hat (i = iₘₐₓ = 3) erreicht hat und es folgt der Schritt 160.

In diesem Schritt 160 werden nun alle zuvor errechneten Azimutwinkel miteinander verglichen, um dann abschließend die gesuchte Funkempfangsrichtung D zu bestimmen und danach das Verfahren im Schritt E zu beenden.

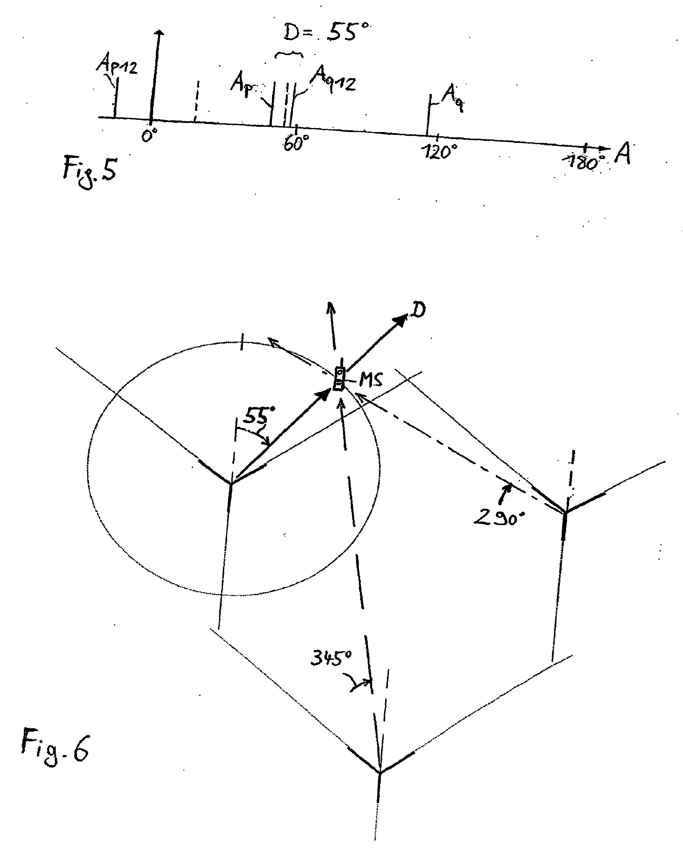

Die Vorgehensweise im Schritt 160 wird auch an Hand der Figur 5 verdeutlicht, wo die geschätzten Azimutwinkel aufgetragen sind. An der Figur zeigt sich, dass im Bereich von 50 bis 60 ° eine Anhäufung der Schätzwerte zu bemerken ist. Durch eine Mittelwertbildung der dort vorliegenden drei Schätzwerte ergibt sich schließlich eine Funkempfangsrichtung D zu 55°.

Die Werte R23 und T23 beziehen sich ausschließlich auf solche Funkfeldbereiche (Sektoren), die das Mobilkommunikationsendgerät MS nicht direkt versorgen. Es sind also keine "serving cells" oder "active sets", sondern sogenannte "neighbor cells" oder "candidate/monitoring sets". Diese Sektoren dienen der Beobachtung (Monitoring) durch das Mobilkommunikationsendgerätes MS, welches dort keine Uplink-Signale sendet. Man kann nun auch lediglich solche Monitoringwerte, d.h. auf dem Downlink gemessene Empfangspegel, zur Bestimmung der Azimutwinkel und Funkempfangsrichtung heranziehen, insbesondere dann, wenn es mehrere solcher Funkfeldbereiche gibt (z.B. 5 bei einer Sektorisierung von jeweils 60 Grad). Das hat den Vorteil, dass die Messwerte nicht von Einflüssen aufgrund von einer in der "serving cell" durchzuführenden Sendeleistungssteuerung auf den dortigen Funkkanälen beeinträchtigt werden. Denn die Funksignale, die in den "neighbor cells" von dem Mobilkommunikationsgerät zu beachten sind, sind Funkkanäle, auf denen mit einer konstanten (Maximal-) Leistung abgestrahlt wird.

Das erfindungsgemäße Verfahren kann bereits an einem einzigen Funkfeststationsstandort durchgeführt werden, so dass es keines Funkkontaktes mit mehreren Funkfeststationsstandorten bedarf. Die Schätzung der Funkempfangsrichtung wird um so genauer, je mehr Iterationen durchgeführt werden können. Das wiederum hängt auch von der Anzahl der vorhandenen Sektoren ab. Es ist jedoch auch denkbar, dass nicht die Empfangswerte von verschiedenen Funksektoren miteinander ins Verhältnis gesetzt werden, sondern etwa der Empfangspegel der von einer Rundstrahlantenne ausgeht und der Empfangspegel der von einer Sektorantenne ausgeht. Das heißt, dass bereits innerhalb eines einzelnen Funksektors die Funkrichtung bestimmt werden kann, indem zum einen der Empfangspegel auf einem Funkkanal gemessen wird, der von einer Rundstrahlantenne ausgeht (zum Beispiel auf dem Rundspruchsignalisierungskanal, dem sogenannten "broadcast control channel") und zum anderen der Empfangspegel der entsprechenden Sektorantenne (zum Beispiel auf einem der Verkehrskanäle) gemessen wird. An Stelle von Sektorantennen ist es natürlich auch denkbar, dass Gruppenantennen zum Einsatz kommen. Unabhängig von der Art der eingesetzten Antennen ergibt sich der Vorteil der Erfindung bereits dadurch, dass nicht absolute Empfangspegel sondern Verhältniswerte (also relative Empfangspegel) berechnet werden und mit entsprechenden Referenzwerten verglichen werden. Das hat unter anderem den Vorteil, dass die vorgestellte Berechnungsmethode unabhängig ist von Funkausbreitungsbedingungen.

Das vorgestellte Verfahren kann zu einer Positionsbestimmung von Mobilfunkgeräten verwendet werden. Dies wird beispielhaft an Hand der Figur 6 kurz beschrieben: Dort wird von einem zellularen Funknetz ausgegangen, bei dem jeder Funkfeststationsstandort über mehrere Sektorantennen verfügt. Wird nun an mehreren Funkfeststationsstandort, zumindest aber an zwei benachbarten, die Bestimmung der jeweiligen Funkempfangsrichtung D durchgeführt, so ist eine Kreuzpeilung möglich, mit der schließlich die Position des Mobilkommunikationsendgerätes MS bestimmt werden. In dem in Figur 6 dargestellten Beispiel wird an einem Funkfeststationsstandort eine Empfangsrichtung D gleich 55° ermittelt und an einem zweiten Funkfeststationsstandort eine Empfangsrichtung von 290° sowie an einem dritten Standort eine Empfangsrichtung von 345°. Durch eine Überlagerung der verschiedenen Empfangsrichtungen ergibt sich ein Dreieck (im Idealfall ein Schnittpunkt), das den Aufenthaltsbereich des Mobilkommunikationsendgerätes MS angibt. Es sind natürlich auch Verfahren denkbar, bei dem nur in einer einzigen Funkzelle oder Funksektor die Empfangsrichtung bestimmt wird und diese im Zusammenhang mit einer Entfernungsbestimmung (Signallaufzeitmessung) zur Positionsberechnung herangezogen wird. Das vorgestellte Verfahren ist beliebig kombinierbar mit anderen Ortungs- und Lokalisierungsverfahren.

## Patentansprüche

1. Verfahren (100) zum Bestimmen der Funkempfangsrichtung (D) in Abwärtsrichtung (DL) an einem Funkfeststationsstandort (BS) in einem Mobilkommunikationsnetz, bei dem durch den Funkfeststationsstandort (BS) mindestens zwei räumliche Funkversorgungsbereiche (S1, S2, S3) abgedeckt werden, wobei in jedem Funkversorgungsbereich (S1) in der Abwärtsrichtung (DL) Funksignale mittels einer Sendeantenne (1) zum Empfang durch mindestens ein Mobilkommunikationsendgerät (MS) abgestrahlt werden,
**dadurch gekennzeichnet, dass**
von dem jeweiligen Mobilkommunikationsendgerät (MS) zumindest die Empfangspegel (RL1, RL2) der Funksignale gemessen werden (120), die von einer ersten (1) und von einer zweiten (2) der Sendeantennen abgestrahlt werden, dass aus den beiden gemessenen Empfangspegeln (RL1, RL2) ein Verhältniswert (R12) gebildet wird (130), und dass mittels des Verhältniswertes (R12) eine Schätzung von Azimutwinkeln (Ap12, Aq12) für die zu bestimmende Funksempfangsrichtung (D) durchgeführt wird (160).

2. Verfahren (100) nach Anspruch 1, **dadurch gekennzeichnet, dass** die Azimutwinkel (Ap12, Aq12) geschätzt werden, indem der gebildete Verhältniswert (R12) mit vorgegebenen Referenzwerten (T12) verglichen wird (160), die für verschiedene Azimutwinkel (A) den zu erwartenden Verhältniswert angeben.

3. Verfahren (100) nach Anspruch 7, **dadurch gekennzeichnet, dass** die Sendeantennen Sektorantennen (1, 2, 3) oder Gruppenantennen sind, und dass die Funkversorgungsbereiche Funksektoren (S1, S2, S3) sind, die jeweils von einer der Sektorantennen (1, 2, 3) bzw. Gruppenantennen versorgt werden.

4. Verfahren (100) nach Anspruch 2, **dadurch gekennzeichnet, dass** die beiden Sendeantennen (1, 2), von deren Funksignalen die Empfangspegel (RL1, RL2) gemessen werden (120), zwei zueinander benachbarte Funkversorgungsbereiche (S1, S2) versorgen, und dass das Mobilkommunikationsendgerät (MS) sich zumindest in einem (S1) dieser beiden Funkversorgungsbereiche aufhält.

5. Verfahren nach Anspruch 1,
**dadurch gekennzeichnet,**
**dass** eine der Sendeantennen eine Rundstrahlantenne ist, von der der gesamte Bereich des Funkfeststationsstandortes und damit mindestens zwei räumliche Funkversorgungsbereiche versorgt werden, dass die anderen Sendeantennen Sektorantennen oder Gruppenantennen sind, von denen sektorförmige Funkversorgungsbereiche versorgt werden, und dass von dem Mobilkommunikationsendgerät die Empfangspegel gemessen werden, die von Funksignalen stammen, die die Rundstrahlantenne abstrahlt, und die von Funksignalen stammen, die zumindest diejenige Sektor- bzw. Gruppenantenne abstrahlt, die den Funkversorgungsbereich versorgt, in dem sich das Mobilkommunikationsendgerät aufhält.

6. Verfahren (100) nach Anspruch 1, **dadurch gekennzeichnet, dass** von dem Mobilkommunikationsendgerät (MS) auch diejenigen Empfangspegel (RL3) der Funksignale gemessen werden (120), die von den übrigen Sendeantennen (3) abgestrahlt werden, dass aus jeweils zwei gemessenen Empfangspegeln (RL3, RL1) ein Verhältniswert (R31) gebildet wird (130), der unabhängig ist von den herrschenden Funkausbreitungsbedingungen, dass mittels dieser weiteren Verhaltniswerte (R31) die Schätzung von weiteren Azimutwinkeln (Ap31, Aq31) für die zu bestimmende Funksempfangsrichtung (D) durchgeführt wird und dass mittels aller geschätzten Azimutwinkel die Funksempfangsrichtung (D) bestimmt wird (160).

## Claims

1. A process (100) for determining the radio reception direction (D) on the downlink (DL) at a radio base station location (BS) in a mobile communications network, wherein at least two spatial radio coverage areas (S1, S2, S3) are covered by the radio base station location (BS), wherein in each radio coverage area (S1) on the downlink (DL) radio signals are radiated by means of a transmitting antenna (1) for reception by at least one mobile communications terminal (MS), **characterised in that** at least the reception levels (RL1, RL2) of the radio signals radiated by a first (1) and a second (2) of the transmitting antennae are measured by the relevant mobile communications terminal (MS) (120), that a ratio value (R12) is formed from the two measured reception levels (RL1, RL2) (130), and that by means of this ratio value (R12) an estimation is effected of azimuthal angles (Ap12, Aq12) for the radio reception direction (D) to be determined (160).

2. A process (100) according to Claim 1, **characterised in that** the azimuthal angles (Ap12 , Aq12) are estimated by comparing the formed ratio value (R12) with predetermined reference values (T12) indicating the expected ratio value for different azimuthal angles (A) (260).

3. A process (100) according to Claim 1, **characterised in that** the transmitting antennae are sector antennae (1, 2, 3) or group antennae, and that the radio coverage areas are radio sectors (S1, S2, S3) which are each supplied by one of the sector antennae (1, 2, 3) or group antennae.

4. A process (100) according to Claim 2, **characterised in that** the two transmitting antennae (1, 2), whose radio signals are measured in respect of the reception levels (RL1, RL2) (120), supply two mutually adjacent radio coverage areas (S1, S2) and that the mobile communications terminal (MS) is situated at least in one (S1) of these two radio coverage areas.

5. A process according to Claim 1, **characterised in that** one of the transmitting antennae is an omnidirectional antenna by which the whole area of the radio base station location and therefore at least two spatial radio coverage areas are supplied, that the other transmitting antennae are sector antennae or group antennae by which sector-shaped radio coverage areas are supplied, and that the mobile communications terminal measures the reception levels which emanate from radio signals radiated by the omnidirectional antenna and which emanate from radio signals radiated at least by that sector- or group antenna which supplies the radio coverage area in which the mobile communications terminal is located.

6. A process (100) according to Claim 1, **characterised in that** the reception levels (RL3) of the radio signals radiated by the other transmitting antennae (3) are also measured by the mobile communications terminal (MS) (120), that a ratio value (R31) which is independent of the prevailing radio propagation conditions is in each case formed from two measured reception levels (RL3, RL1) (130), that these further ratio values (R31) are used to effect the estimation of further azimuthal angles (Ap31, Aq31) for the radio reception direction (D) to be determined, and that the radio reception direction (D) is determined by means of all the estimated azimuthal angles (160).

## Revendications

1. Procédé (100) de détermination de l'angle de provenance d'un signal radio (D) dans le sens descendant (DL) sur une station de base radio (BS) dans un système de communication mobile, dans lequel au moins deux zones de réception radio (S1, S2, S3) sont couvertes par la station de base radio (BS), des signaux de radio étant émis dans le sens descendant (DL) dans chaque zone de réception radio (S1) au moyen d'une antenne émettrice (1) pour être reçus par au moins un terminal de communication mobile(MS),
**caractérisé en ce qu'**on mesure (120) par le terminal de communication mobile (MS) concerné au moins les niveaux de réception (RL1, RL2) des signaux radio qui sont émis par une première (1) et une deuxième (2) antennes émettrices, **en ce qu'**une valeur de rapport (R12) est formée à partir des deux niveaux de réception (RL1, RL2) mesurés, et **en ce qu'**au moyen de la valeur de rapport (R12), une estimation des angles d'azimut (Ap12, Aq12) est effectuée pour l'angle de provenance du signal radio (D) à déterminer.

2. Procédé (100) selon la revendication 1, **caractérisé en ce que** les angles d'azimut (Ap12, Aq12) sont estimés en comparant (160) la valeur de rapport (R12) formée à des valeurs de référence (T12) prédéfinies qui indiquent la valeur de rapport attendue pour les différents angles d'azimut (A).

3. Procédé (100) selon la revendication 1, **caractérisé en ce que** les antennes émettrices sont des antennes de secteur (1, 2, 3) ou des antennes de groupe, et **en ce que** les zones de réception radio sont des secteurs radio (S1, S2, S3) qui sont chacun alimentés par l'une des antennes de secteur (1, 2, 3) et/ou antennes de groupe.

4. Procédé (100) selon la revendication 2, **caractérisé en ce que** les deux antennes émettrices (1, 2) dont les niveaux de réception (RL1, R12) des signaux radio sont mesurés (120) alimentent deux zones de réception de signaux radio (S1, S2) adjacentes, et **en ce que** le terminal de communication mobile (MS) se situe au moins dans l'une (S1) de ces deux zones de réception de signaux radio.

5. Procédé selon la revendication 1, **caractérisé en ce que** l'une des antennes émettrices est une antenne omnidirectionnelle par laquelle toute la zone de la station de base radio est alimentée et par laquelle au moins deux zones spatiales de réception radio sont alimentées, **en ce que** les autres antennes émettrices sont des antennes de secteur ou des antennes de groupe par lesquelles des zones de réception de signaux radio en forme de secteurs sont alimentées, et
**en ce que** les niveaux de réception du terminal de communication mobile qui proviennent de signaux radio que l'antenne omnidirectionnelle émet, et qui proviennent de signaux radio qu'au moins l'antenne de secteur et/ou de groupe qui alimente la zone de réception radio dans laquelle se site le terminal de communication mobile émet, sont mesurés.

6. Procédé (100) selon la revendication 1, **caractérisé en ce qu'**on mesure (120) également les niveaux de réception (RL3) des signaux radio du terminal de communication mobile (MS) qui sont émis par les autres antennes émettrices (3), **en ce qu'**à partir de respectivement deux niveaux de réception (RL3, RL1) mesurés, une valeur de rapport (R31) est formée (130) qui est indépendante des conditions de répartition radio qui règnent, **en ce qu'**au moyen de cette autre valeur de rapport (R31), l'estimation d'autres angles azimut (Ap31, Aq31) pour l'angle de provenance du signal radio (D) à déterminer est effectuée, et **en ce que** l'angle de provenance du signal radio (D) est déterminé (160) au moyen de tous les angles azimut estimés.
